# EUROPEAN PATENT APPLICATION

(11) **EP 1 471 429 A1**
(43) Date of publication of application: **27.10.2004**
(21) Application number: 03705008.5
(22) Date of filing: 22.01.2003
(51) Int. Cl.: G06F 12/14, G06F 12/16

(54) **MEMORY DEVICE, TERMINAL APPARATUS, AND DATA REPAIR SYSTEM**

(30) Priority: 31.01.2002 JP 2002023704
(71) Applicant: MATSUSHITA ELECTRIC INDUSTRIAL CO., LTD., Kadoma-shi, Osaka 571-8501 (JP)
(72) Inventor: NAKANISHI, Yoshiaki, Suginami-ku, Tokyo 166-0014 (JP); SASAKI, Osamu, Ota-ku, Tokyo 144-0046 (JP); TAKAGI, Yoshihiko, Ota-ku, Tokyo 144-0046 (JP)
(74) Representative: Grünecker, Kinkeldey, Stockmair & Schwanhäusser Anwaltssozietät
(86) International application number: PCT/JP2003/000500
(87) International publication number: WO 2003/065225

(57) **Abstract**

A system includes server 10 that manages data and check information for checking damage to the data, terminal apparatus 20 that acquires the data and the check information from server 10, and memory device 30 that stores the data acquired by terminal apparatus 20 into non-tamper-resistant memory area 31 and the check information acquired by terminal apparatus 20 into tamper-resistant memory area 32. Memory device 30 detects data in which data damage has occurred using the check information. Terminal apparatus 20 acquires the detected data from server 10, and memory device 30 repairs the data damage using the data acquired by terminal apparatus 20. This improves the storage efficiency of memory device 30, and furthermore, reduces the data communication time taken for acquiring normal data' for repair from server 10.

## Description

### FIELD OF THE INVENTION

The present invention relates to a repair system which repairs the damaged part of downloaded data, and a memory device and a terminal apparatus which make up the system, and more particularly, aims to enable data stored in the memory device to be repaired effectively.

### BACKGROUND ART

Conventionally, it has been a widely accepted practice to download data such as a program which dictates the processing of a terminal apparatus to the terminal apparatus from a server via network. In some cases, data stored in a memory medium of a terminal apparatus is damaged due to various reasons, including abnormal transmission during download, device hardware failure, loss of data caused by a virus, corruption of data caused by an external attack, and so forth.

It is possible to detect these kinds of data damages by checking the matching between check information such as a checksum transmitted by a server together with data and a checksum calculated from the data stored in a memory medium.

When there is a necessity to protect accumulated data against damage or tampering from the outside, data is stored into a memory medium having resistance to tampering (resistance to external attacks) such as an IC card and so on. Resistance to tampering is actualized by providing a dummy circuit, limiting a processing time to a set time period, or adopting a configuration which is not susceptible to effects of heat or electromagnetic wave.

As a method for repairing damaged data, it is described in Japanese Laid-Open Patent Publication No. 4-340150 that a terminal apparatus issues a download request to a server upon discovery of abnormality in data, and downloads program 'data again from the server.

Additionally, it is described in Japanese Laid-Open Patent Publication No. 11-184705 that a terminal apparatus is provided with the first and the second memory media in both of which downloaded data is stored redundantly, where the data stored in the second memory medium is used for overwriting the data stored in the first memory medium in case that the data stored in the first memory medium is damaged.

However, a tamper-resistant memory device is high in cost, and it does not offer much memory capacity. Therefore, a tamper-resistant memory device is not able to accumulate such a type of data having large data volume as music data, etc.

Moreover, there is a problem in the scheme which lets replacement data get re-downloaded from a server upon discovery of abnormality in data; that is, a lot of communication time is required for the re-downloading.

Additionally, a different, problem arises in the scheme in which redundant data is retained; a terminal apparatus must comprise a memory medium having a large memory capacity.

Recently, EC (Electronic Commerce) has started to permeate our society, as seen in shopping of articles or entertainment contents data, network banking, and so forth, which are conducted through use of hand-held terminals. They are also used for address directory and schedule management applications. Although it is possible to have a server on network which manages these kinds of information, doing so presents a problem of a time lag in retrieving information or another problem of denied access to desired information during network failure. Accordingly, there is a great demand in card devices which offer immediate access and sufficient capacity as memory media for storing data which is handled by hand-held terminals, including these kinds of information. However, supposing that repairing of damaged information with low cost (including cost in terms of time) and reliability is not ensured to cope with possible occurrences of any damages to card device information, it does not only hinder processing of these kinds of information but also impose inconveniences on users, which will present a great obstacle to a proliferation of new services. Moreover, a poor proliferation of the new services spells an impediment to development of IT (Information Technology) itself.

### DESCRIPTION OF THE INVENTION

It is an object of the present invention to provide a data repair system which is able to repair damaged data effectively, and a memory device and a terminal apparatus which implement the system.

This object is achieved by providing tamper-resistant memory area and non-tamper-resistant memory area in a memory device, and storing data in the non-tamper-resistant memory area while storing check information used for checking damage to the data in the tamper-resistant memory area.

### BRIEF DESCRIPTION OF THE DRAWINGS

FIG. 1 is a diagram illustrating the entire configuration of a data repair system in Embodiment 1 of the present invention;
FIG. 2 is a diagram illustrating the.hardware. configuration of a memory device in Embodiment 1 of the present invention;
FIG. 3 is a diagram illustrating an example of the first data configuration of check information in Embodiment 1 of the present invention;
FIG. 4 is a diagram illustrating an example of the second data configuration of check information in Embodiment 1 of the present invention;
FIG. 5 is a diagram illustrating the data processing operation of the memory device in Embodiment 1 of the present invention;
FIG. 6 is a flowchart illustrating the writing procedure of the memory device in Embodiment 1 of the present invention;
FIG. 7 is a flowchart illustrating the writing procedure which further includes a data damage check procedure therein of the memory device in Embodiment 1 of the present invention;
FIG. 8 is a flowchart illustrating the data damage check procedure of the memory device in Embodiment 1 of the present invention;
FIG. 9 is a diagram illustrating the operation of data repair processing of the memory device in Embodiment 1 of the present invention;
FIG. 10 is a diagram illustrating the operation of correction information acquisition of the data repair system in Embodiment 1 of the present invention;
FIG. 11 is a flowchart illustrating the correction data writing procedure of the memory device in Embodiment 1 of the present invention;
FIG. 12 is a flowchart illustrating the data reading procedure of the memory device in Embodiment 1 of the present invention;
FIG. 13 is a diagram illustrating the hardware configuration of a memory device in Embodiment 2 of the present invention;
FIG. 14 is a diagram illustrating the processing operation 1 performed on encrypted data of the memory device in Embodiment 2 of the present invention;
FIG. 15 is a diagram illustrating the processing operation 2 performed on encrypted data of the memory device in Embodiment 2 of the present invention;
FIG. 16 is a diagram illustrating the writing operation of signature-affixed check information of a memory device in Embodiment 3 of the present invention;
FIG. 17 is a diagram illustrating the writing operation of check information which is transmitted on an encrypted communication path of the memory device in Embodiment 3 of the present invention;
FIG. 18 is a diagram illustrating the writing operation of signature-affixed check information of a memory device in Embodiment 4 of the present invention;
FIG. 19 is a diagram illustrating the writing operation of no-signature-affixed check information of the memory device in Embodiment 4 of the present invention;
FIG. 20 is a diagram illustrating the data processing operation of a memory device in Embodiment 5 of the present invention; and
FIG. 21 is a diagram illustrating the operation of contents distribution in a system in Embodiment 5 of the present invention.

### BEST MODE FOR CARRYING OUT THE INVENTION

Embodiments of the present invention will be described in detail below with reference to the accompanying drawings. Here, in this specification, damage to data is defined as any change in data from its original form and/or any loss in data.

### (Embodiment 1)

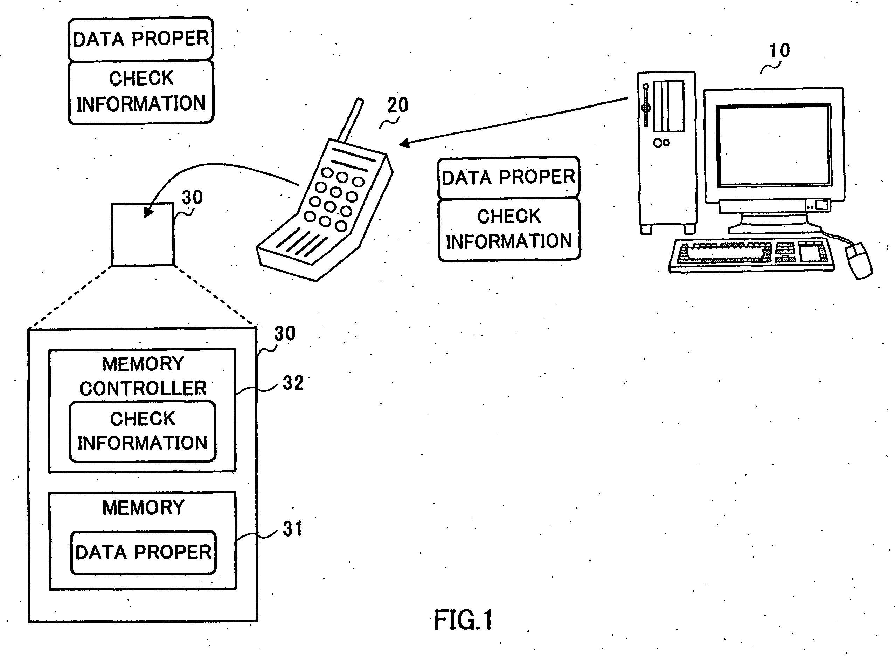

A data repair system according to Embodiment 1 of the present application comprises, as depicted in FIG. 1, server 10 that manages data to be downloaded, terminal 20 that secures a transmission path to/from server 10 and receives data to be downloaded, and memory device 30 that is inserted into terminal 20 and stores the downloaded data.

Data to be downloaded is immutable data which does not permit a user to alter the data, such as program data, music data, map data, and so forth. Server 10 separates these items of data into a plurality of blocks, and generates check information (such as a hash value, a checksum, a CRC (Cyclic Redundancy Check), a signature, etc.) for the data in each block, and then retains and manages the data proper and the check information. Then, upon receiving a data request from terminal 20, server 10 allows the data proper and the check information of the requested data to be downloaded to terminal 20.

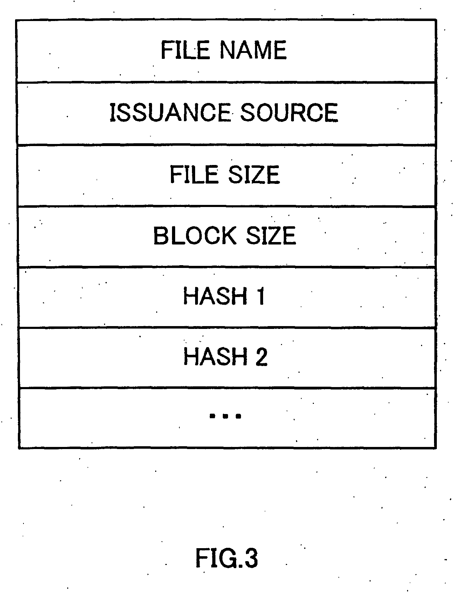

FIG. 3 illustrates an example of check information. This check information includes a data file name, issuance source information indicating a server name, URL (Uniform Resource Locator), a data issuance company name from which data is acquired, and so forth, a file size, a block size of each block, and a hash value for each block.

Memory device 30 is a memory medium called as a memory card and the like, and is provided with memory 31 that comprises flash memory, etc. and memory controller 32 that controls the writing/reading of data into/out of memory 31. Memory controller 32 offers tamper resistance, whereas memory 31 is not tamper resistant. Among data downloaded from server 10, the data proper is stored into area of memory 31 in memory device 30, whilst the check information is stored into memory controller 32.

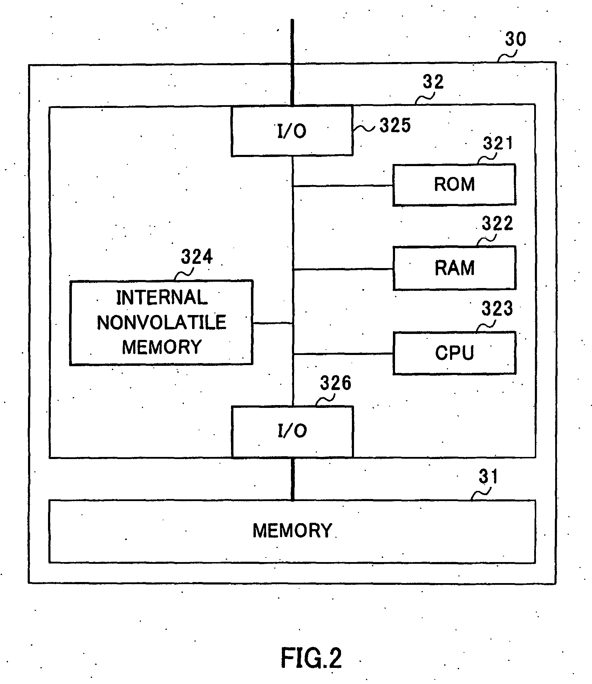

FIG. 2 illustrates the hardware configuration of memory device 30. Memory controller 32 comprises CPU (Central Processing Unit) 323 that controls the operation of memory device 30, RAM (Random Access Memory) 322 that CPU 323 uses as work area, ROM (Read Only Memory) 321 that stores a program dictating the operation of CPU 323, tamper-resistant internal nonvolatile memory 324 that comprises EEPROM (Electrically Erasable Programmable Read Only Memory) and the like, input/output section (I/O) 325 through which data is inputted into/outputted from terminal 20, and I/O 326 that interfaces with memory 31.

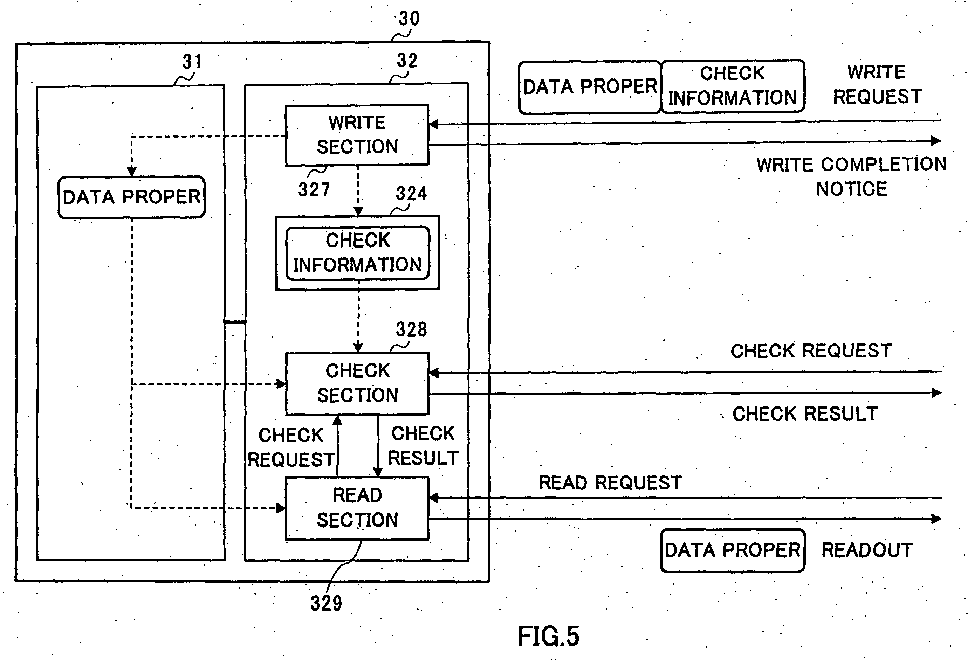

Data processing of memory device 30 is diagrammatized in FIG. 5. Memory controller 32 comprises write section 327 that writes data proper into memory 31 and writes check information into internal nonvolatile memory 324, check section 328 that detects damage to the data proper using the check information, and read section 329 that reads out the data proper stored in memory 31. Each function of write section 327, check section 328, and read section 329 is implemented by the execution of program-dictated processing by CPU 323.

When data downloaded from server 10 is written into memory device 30, terminal 20 outputs the data proper and the check information acquired from server 10 together with a write request to memory device 30.

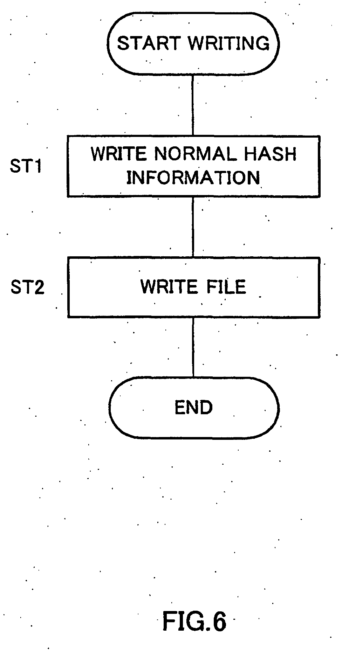

Write section 327 performs the following steps as illustrated in the flowchart in FIG. 6.

Step ST1: Writes. the check information including hash information for each block into internal nonvolatile memory 324.

Step ST2: Writes the data proper of a file into memory 31.

Upon completion of this writing processing, write section 327 outputs a writing completion notice to terminal 20.

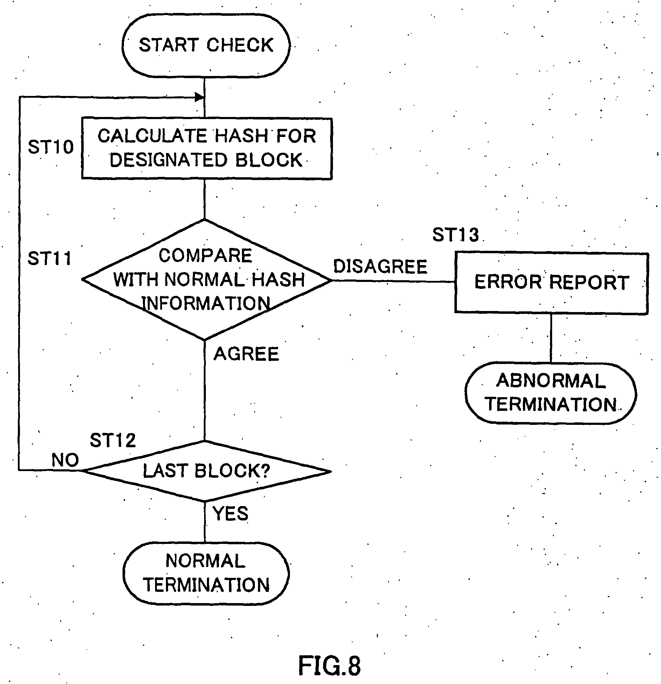

When the data is read out of memory device 30, it is checked whether the data to be read out is damaged or not. At this time, a check request for checking data damage to the selected file is inputted into memory device 30 from terminal 20, and check section 328 performs processing illustrated in the flowchart in FIG. 8.

Step ST10: The check information is read out of internal nonvolatile memory 324, and the area of each block is identified based on "block size" information contained therein, and then a hash value for the data in the target block among the data proper stored in memory 31 is calculated.

Step ST11: The calculated hash value is compared with a hash value of the corresponding block contained in the check information, and when they do not match up, then processing flow goes to step ST13.

Step ST13: An error report which contains information for identifying the location of the block and information on block size and issuance source is prepared, and such an error report is outputted as a check result to terminal 20.

When, in step ST11, the calculated hash value coincides with the hash value of the corresponding 'block contained in the check information, the flow goes to step ST12.

Step ST12: Processing in step ST10 and thereafter is repeated while changing blocks sequentially until the processing is also followed on the last block, and upon finishing the last block, checking processing is completed to output a check result indicating "normal" to terminal 20.

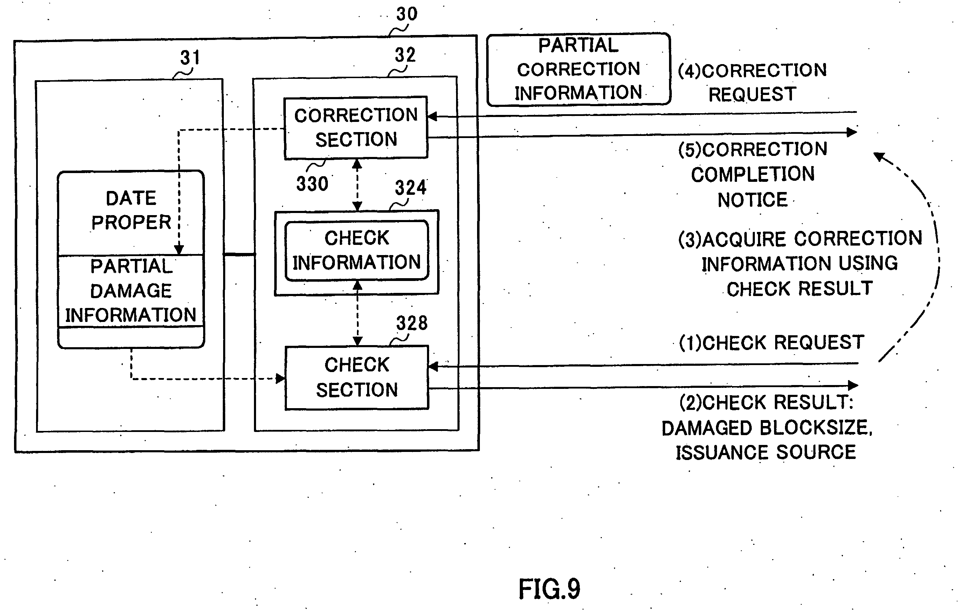

Terminal 20, upon receiving the check result on the error, acquires data of the block which contains the damaged data from server 10, and memory device 30 uses the acquired data to repair the data in memory 31. This data repair processing procedure is diagrammatized in FIG. 9. Memory controller 32 in this memory device 30 comprises correction section 330 that repairs data stored in memory 31 in addition to internal nonvolatile memory 324 and check section 328. The function of this correction section 330 is implemented by the execution of program-dictated processing by CPU 323.

Upon receiving an input of a check request for checking damaged data from terminal 20 --- (1), check section 328 in memory device 30 outputs an error report as a check result to terminal 20, where the error report contains information for identifying the location of the block in which data damage has occurred as well as information on its block size and issuance source following a procedure in FIG. 8 --- (2).

Triggered by this error report, terminal 20 makes a request to issuance source server 10 for data of the block in which the damage to the data has occurred. Among data under its management, server 10 reads out data proper of the corresponding block, and has terminal 20 download the readout data proper --- (3).

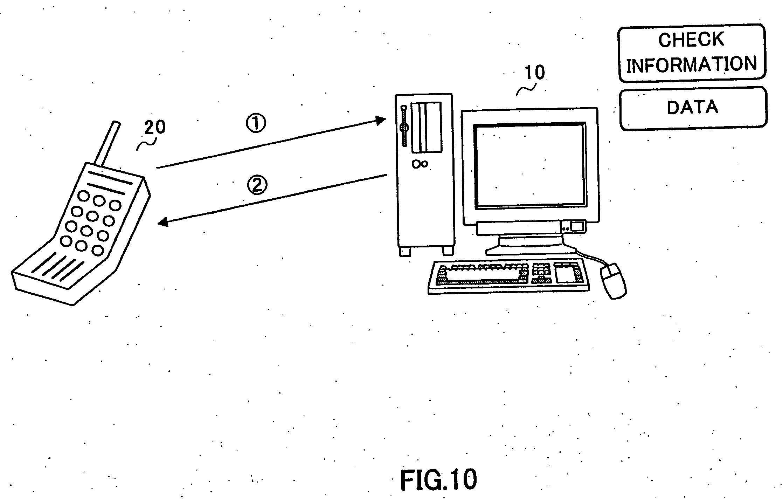

This procedure is diagrammatized in FIG. 10. Terminal 20 makes a request to server 10 for normal. data (partial data) of the affected block containing the damaged data based on information received from the memory device 30 on the issuance source (URL), location of the block containing the damaged data, and its block size (①). Referring to the check information, server 10 sends the requested partial data in return to terminal 20 (②). Acquisition of the specified size of information from the specified location in a file on a server in this way is a known technique, commonly done from existing FTP (File Transfer Protocol) and HTTP (Hypertext Transfer Protocol) servers.

Upon acquiring data proper of the block to be corrected, terminal 20 creates partial correction information which contains the acquired data proper and information designating the block to be corrected, and outputs the created information together with a correction request to memory device 30 --- (4).

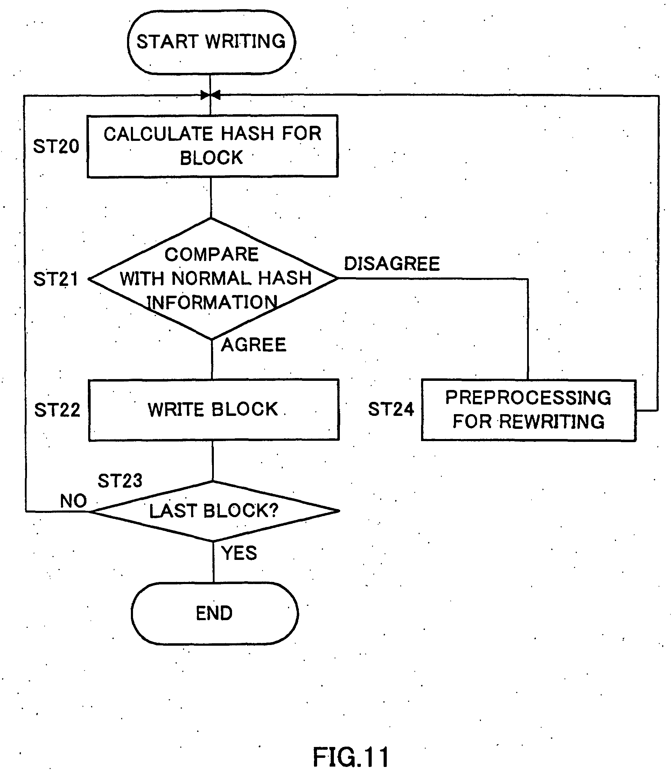

Upon receipt of the partial correction information, correction section 330 in memory device 30 carries out data repair following the procedure illustrated in FIG. 11.

Step ST20: A hash value of the data proper in the block contained in the partial correction information is calculated.

Step ST21: The calculated hash value is compared with a hash value of the corresponding block contained in the check information stored in internal non-volatile memory 324. When they do not match up, then this processing flow goes to step ST24.

Step ST24: A procedure of "preprocessing for rewriting", which prompts terminal 20 to re-acquire data proper of the block, is executed, and procedures in step ST20 and thereafter are repeated upon re-acquisition of the data proper.

When, in step ST21, the calculated hash value coincides with the hash value of the corresponding block contained in the check information, the flow goes to step ST22.

Step ST22: The data proper is overwritten into memory 31.

Step ST23: Procedures in step ST20 and thereafter are repeated when the data proper of the other block(s) is contained in the partial correction information, and repair processing is finished when there is no more data proper which should be written in the partial correction information.

Upon completion of data repair processing in this way, correction section 330 outputs a correction completion notice to terminal 20 --- (5).

When data is repaired, a check result outputted by check section 328 indicates "normal".

Receiving a readout request from terminal 20 for reading file data for which a check result "normal" is issued out of memory device 30, read section 329 in memory device 30 reads out the corresponding data proper from memory 31 and outputs the readout data proper to terminal 20.

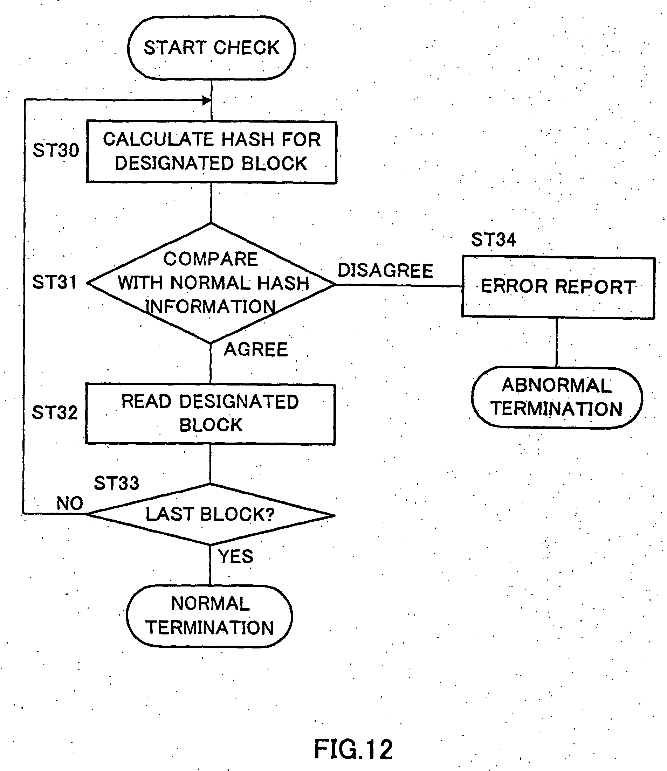

Additionally, when terminal 20 makes a request to memory device 30 for reading out file data without going through data damage checking procedures, read section 329 issues a check request to check section 328 for checking data damage to data in each block which is to be read out, and data in the block to which check result "normal" is given is read out one after the other. The flowchart in FIG. 12 illustrates the operation of this readout processing.

Step ST30: Upon receipt of the readout request for reading file data, read section 329 notifies the name of the requested file to check section 328 to request a check on damage to the file data.

Receiving the check request from read section 329, check section 328 reads the check information of the corresponding file out of internal nonvolatile memory 324, identifies the area of each block based on block size information, and then calculates a hash value for the data in the target block of the data proper stored in memory 31.

Step ST31: The calculated hash value is compared with the hash value of the corresponding block contained in the check information. When they do not match up, the processing flow goes to step ST34.

Step ST34: An error report which contains information for identifying the location of the block and information on its block size and issuance source is generated, and such an error report is outputted as a check result to read section 329. Receiving the error report, read section 329 outputs the error report to terminal 20.

When, in step ST31, the'calculated hash value coincides with the hash value of the corresponding block contained in the check information, the flow goes to step ST32.

Step ST32: Check section 328 notifies to read section 329 a check result which contains information for identifying the location of the block and information for indicating that the block is "normal", and read section 329 reads the data proper of the block out of memory 31.

Step ST33: Processing in step ST30 and thereafter is repeated while changing blocks sequentially until the processing is also followed. on the last block of the designated file, and upon finishing the last block, readout processing is completed.

Upon receiving the error report from read section 329, which serves as a trigger, terminal 20 acquires data proper of the block in which data damage has occurred from issuance source server 10, and memory device 30 uses the acquired data to repair data. This processing is the same as one which is diagrammatized in FIG. 9 and FIG. 11. Then, the check result of the repaired data is indicated as "normal", and read section 329 reads the repaired data proper out of memory 31.

In this readout processing, the data proper in a block of which the check result is judged as "normal" is read out immediately, and therefore it is possible to reduce to zero the possibility of the occurrence of data damage from the time of check completion through the time of data readout.

As explained above, in this data repair system, normal data is acquired from an external source for repairing when a damage has occurred in data stored in a memory device, which makes it possible to enhance the storage efficiency of. the memory device in comparison with a system which retains backup data in a redundant manner. Moreover, it is further possible to narrow the area of data damage down to a small area, and to shorten data communication time required for acquisition of normal repairing data from an external source because check information is created in a unit of a block, not in a unit of the entire data.

Still furthermore, because check information is stored in tamper-resistant storage area in a memory device whilst data proper is stored in non-tamper-resistant storage area in the memory device, it is possible to simplify the configuration of the memory device, thereby further making it possible to actualize low cost production, compared with a system which stores all data in tamper-resistant storage area as in IC cards. In addition, because check information stored in tamper-resistant storage area is protected from data corruption and tampering, even when data proper is damaged, it is possible to detect data damage with reliability using the check information, and to repair the damaged data completely through acquisition of normal data from an external source.

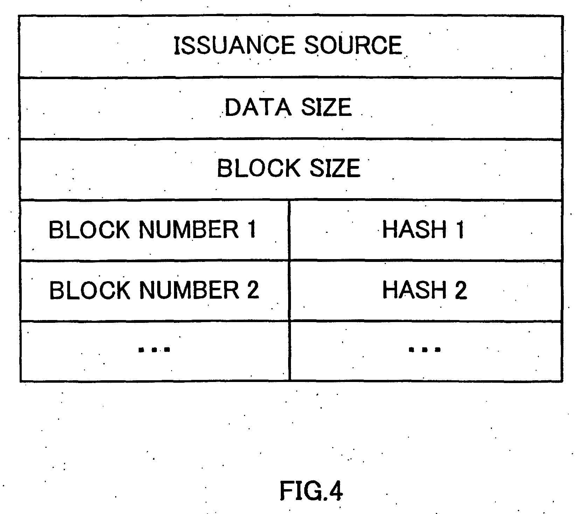

Although FIG. 3 illustrates an example of check information containing a file name, it is possible to configure the check information without containing a file name as illustrated in FIG. 4. In such a configuration, when the URL of each file acquisition source is indicated as issuance source information, the URL varies for each file, and it is possible to identify a file by referring to its URL, eliminating the need for writing of its file name into check information.

Moreover, when the memory area in a memory device where data proper in each block is stored is specified in check information, and as illustrated in FIG. 4, further when its block number representing the memory area and a hash value of the data proper stored in the memory area are written in the check information in a corresponding manner, processing will be easier when check section 328 in memory device 30 checks damage to the data proper stored in memory 31.

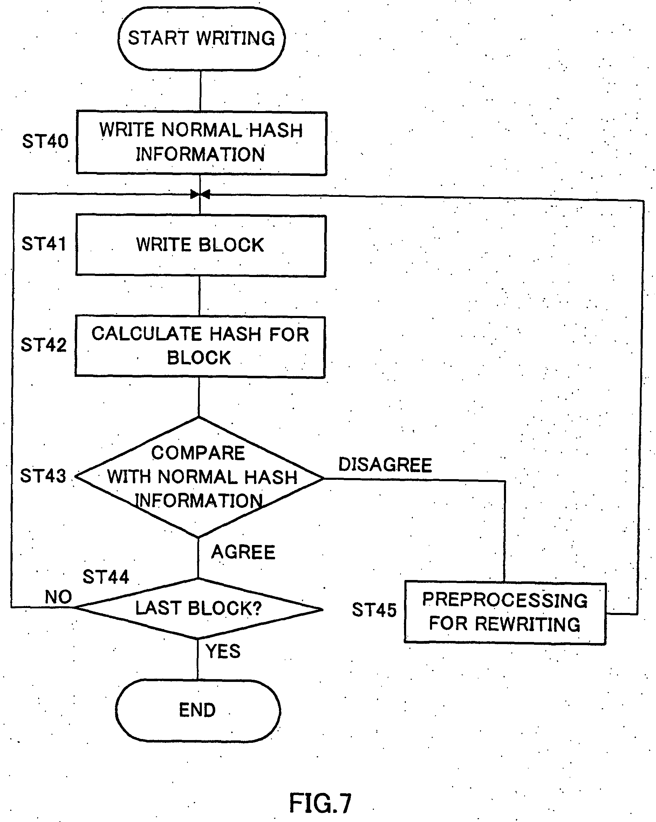

Furthermore, although FIG. 6 illustrates a writing procedure in which data downloaded from server 10 is written into memory device 30 for the moment and then damage to the data is detected at the time of readout, it is also possible to configure a scheme in which data damage is checked at the time of data write-in so that normal data is written therein. In such a configuration, write section 327 and check section 328 in FIG. 5 perform writing processing as illustrated in the flowchart in FIG. 7.

Step ST40: Write section 327 in memory device 30 writes the check information including hash information for each block into internal nonvolatile memory 324, and then the processing flow goes to step ST41.

Step ST41: The data proper in one block is written into memory 31.

Step ST42: Check section 328 calculates a hash value of the data proper of this block, and then the flow goes to step ST43.

Step ST43: The calculated hash value is compared with a hash value of the corresponding block contained in the check information stored in internal non-volatile memory 324. When they do not match up, the flow goes to step ST45.

Step ST45: A procedure of "preprocessing for rewriting", which prompts terminal 20 to re-acquire data proper of the block and changes the writing place of the re-acquired data proper from the place on memory 31 where the original data proper is written, is executed, and processing in step ST41 and thereafter is repeated upon re-acquisition of the data proper. Herein, the change of writing places of the data proper is a measure against a possible case where the memory area affected by data damage is physically broken.

When, in step ST43, the calculated hash value coincides with a hash value of the corresponding block contained in the check information, then this processing flow goes to step ST44.

Step ST44: It is judged whether the block is the last one or not, and when it is not the last block, processing in step ST41 and thereafter is repeated, whilst the writing processing is finished if it is the last block.

Upon completion of the writing processing, write section 327 outputs a writing completion notice to terminal 20. Through these steps of processing, writing of data proper which is free from data damage is ensured, which makes it'possible to reduce the percentage of data damage occurrence in check done at the time of data readout.

Additionally, although it is described herein that a terminal carries out re-acquisition of block data containing data damage upon reception of an error report from a memory device, it may take another form of a configuration in which a memory device issues a distribution request command to a terminal together with a designation of data issuance source and block location for requesting distribution from the issuance source, and the terminal re-acquires data from the issuance source in accordance with the command.

Moreover, in this data repair system, because check information is generated on a block basis and the area of data damage is narrowed down to a small area, it is possible to obtain useful information by gathering and analyzing information on the block in which damage to data has occurred.

A server is able to carry out the following analyses based on statistical information on the blocks requested by each terminal for data repairing.

In a case where damages to the identical area of a fixed data occur among multiple users, ① there is a possibility of data corruption due to a program bug. ② It could be due to the circulation of unauthorized usage of the data (e.g. music files).

In a case where damages to the identical area of a program occur among multiple users, ① there is a possibility of program tampering by some virus. ② It could be due to the circulation of unauthorized alteration scheme of the program.

Furthermore, in a case where corrections by a single identical user seems to occur too often, there is a possibility that the hardware of a memory device is broken, and in such a case, based on the result of this analysis, it is possible to provide a service which sends information to the terminal for recommending repair and replacement of the memory device.

Moreover, in a.case where the number of times of error reporting received from a memory device exceeds a threshold value, or in a case where error reporting is received in numbers. greater than a threshold during a given time period, the terminal regards it as a sign of a possible memory device hardware failure or possible external attacks, and then the following countermeasures can be taken to deal with such a situation; ① acceptance of further error reports from the memory device is ceased, ② transmission of error reports to the server is ceased, ③ acquisition of repair data from the server is ceased, ④ the memory device is replaced, and so forth.

In addition, in a case where the number of uses of a memory device exceeds a threshold value, it is possible to take a countermeasure in which the terminal relocates the data into a new memory device before the memory device reaches the end of its operating life.

Furthermore, depending on how often data damages occur, a memory device itself may disable its autonomous function of data repairing. The disabling of its autonomous function means the halting of its entire or part of functions in the. memory device required for data acquisition and readout, which is done by write section 327, check section 328, read section 329, and so forth. The conditions for disabling its autonomous function includes: if the number of times of data damage detection exceeds a threshold, or if data damage is detected in numbers greater than a threshold within a given time period, and so on, and among modes of disablement to deal with such a case are: ① temporary disablement for a set period (during a set cycle), ② temporary disablement until next reset, ③ full halting (in this case, a specialized service provider is asked to restore the functions), and so forth.

### (Embodiment 2)

Embodiment 2 gives an explanation of a data repair system which stores encrypted data proper into a memory device.

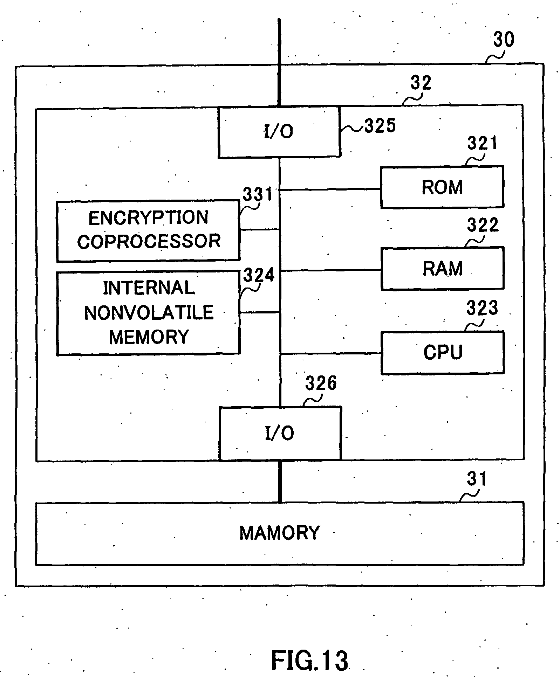

In this memory device, as illustrated in FIG. 13, memory controller 32 further comprises encryption coprocessor 331 which decrypts encrypted data. Except for that mentioned above, the configuration is the same as that of Embodiment 1 (FIG. 2).

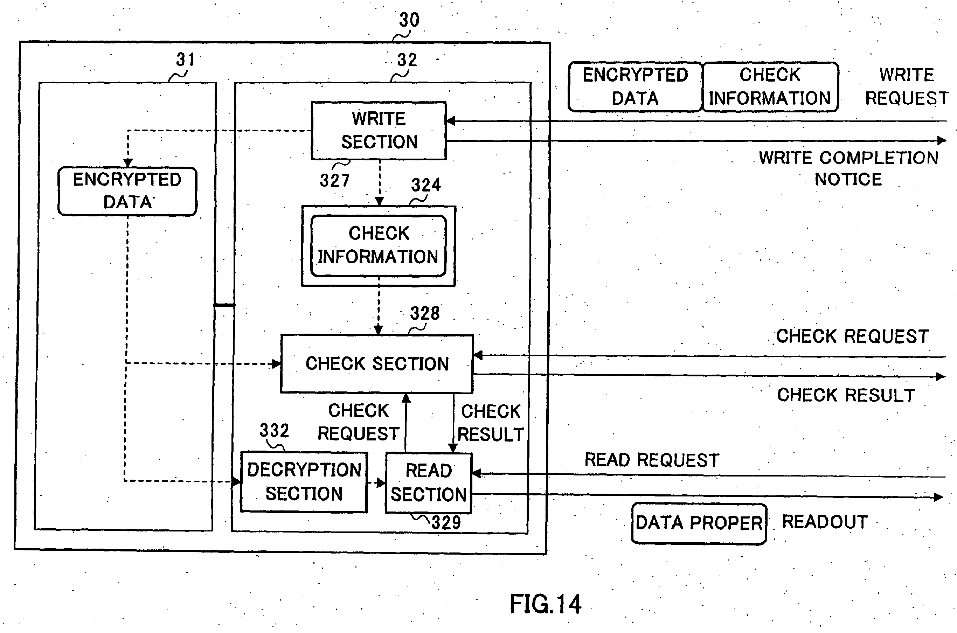

Data processing of this memory device 30 is diagrammatized in FIG. 14. Memory controller 32 comprises decryption section 332 that decrypts encrypted data in addition to write section 327, check section 328, read section 329, and internal nonvolatile memory 324. The function of decryption section 332 is implementedby encryption coprocessor 331.

After encryption of file data, server 10 in this system separates the encrypted data into a plurality of blocks, and generates check information (such as a hash value, a checksum, a CRC, a signature, etc.) for data in each block, and then retains and manages the encrypted data and the check information. Then, up on receiving a data request from terminal 20, server 10 allows the encrypted data and the check information to be downloaded to terminal 20.

Terminal 20 outputs to memory device 30 the encrypted data and the check information acquired from server 10 together with a write-in request.

Following procedures illustrated in FIG. 6 and FIG. 7, write section 327 in memory controller 32 writes the check information into internal nonvolatile memory 324 and the encrypted data into memory 31.

When checking damage to the encrypted data, check section 328 in memory controller 32 calculates a hash value for each block of the encrypted data stored in memory 31, and compares the calculated hash value with a hash value of the corresponding block contained in the check information stored in internal nonvolatile memory 324. Then, the section 328 outputs a "normal" check result when they match up, whereas it outputs an error report when they do not match up.

When the data stored in memory device 30 is read out, decryption section 332 decrypts the encrypted data of the block for which the result of check conducted by check section 328 is "normal", and read section 329 reads the decrypted data out.

Except for that mentioned above, the operation is the same as that in Embodiment 1.

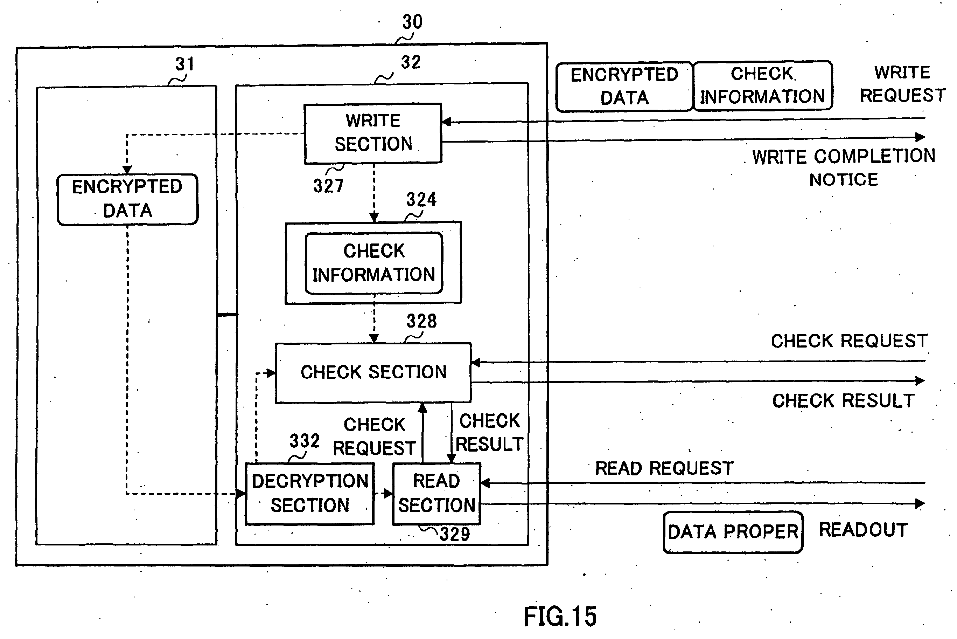

FIG. 15 illustrates another aspect for a'case where data is encrypted.

Server 10 in this system separates file data into a plurality of blocks, generates check information for data in each block, encrypts the data in each block, and then retains and manages the encrypted data and the check information. Then, upon receiving a data request from terminal 20, server 10 allows the encrypted data and the check information to be downloaded to terminal 20.

Terminal 20 outputs to memory device 30 the encrypted data and the check information acquired from server 10 together with a write-in request.

In the same way as illustrated in FIG. 14, write section 327 in memory controller 32 writes the check information into internal nonvolatile memory 324 and the encrypted data into memory 31.

When checking damage to the encrypted data, check section 328 in memory controller 32 calculates a hash value for decrypted data, which is obtained by decryption of the encrypted data of each block stored in memory 31 at decrypting section 332, and compares the calculated hash value with a hash value of the corresponding block contained in the check information. Then, the section 328 outputs a "normal" check result when they match up, whereas it outputs an error report when they do not match up.

Read section 329 reads out data decrypted at decrypting section 332 to the outside only in a case where the result of check conducted by check section 328 is "normal."

Except for that mentioned above, the operation is the same as that in Embodiment 1.

As described above, data damage is checked using the check information of the encrypted data in FIG. 14, whilst data damage is checked using the check information of the decrypted data in FIG. 15; however, in either case, it is always necessary to go through a checking procedure at the check section for decrypting the encrypted data and reading it out.

In this system, it is possible to ensure protection of data security because encrypted data is transmitted between a server and a terminal, and the encrypted data is stored in non-tamper-resistant memory area of a memory device.

Although the above description explains a case where encryption coprocessor 331 is provided in memory controller 32 herein, alternatively, CPU 323 may perform the function of encryption coprocessor 331.

### (Embodiment 3)

Embodiment 3 gives an explanation of a data repair system provided with a countermeasure against tampering of check information.

In this system, a server allows a terminal to download data which is separated in blocks and check in formation to which a signature is affixed, and a memory device authenticates the signature when the check information is stored.

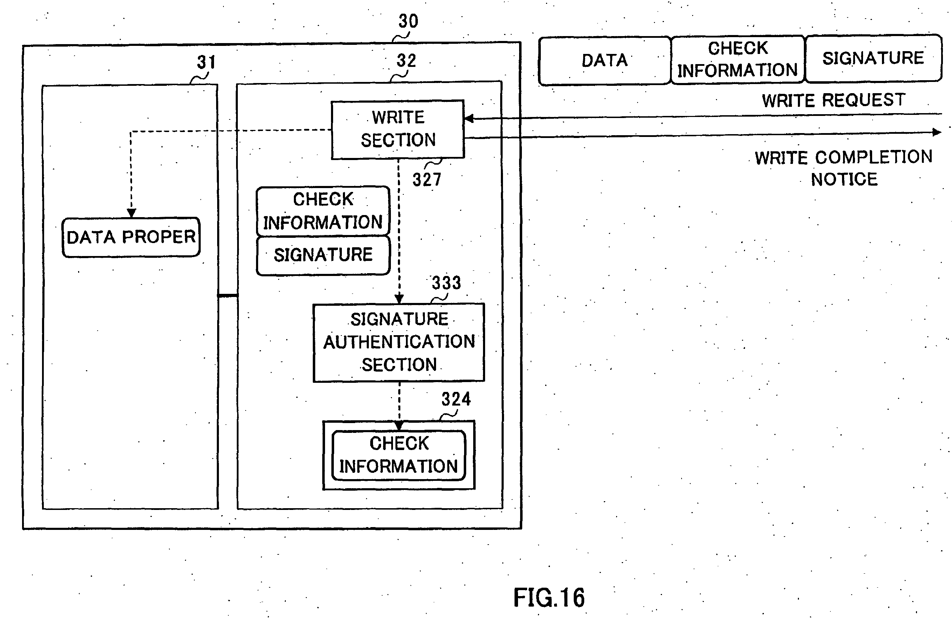

Data processing of this memory device 30 is diagrammatized in FIG. 16. Memory controller 32 comprises signature authentication section 333 that authenticates the signature of check information in addition to write section 327 and internal nonvolatile memory 324. The function of this signature authentication section 333 is implemented. by the carrying out of program-dictated processing by CPU 323.

Server 10 in this system retains and manages the data separated in a plurality of blocks and the check information thereof, and upon receipt of a data request from terminal 20, allows terminal 20 to download data proper and the check information to which a signature is affixed.

Terminal 20 outputs to memory device 30 the data and the signed check information which are acquired from server 10 together with a write-in request.

Write section 327 in memory controller 32 provides the signed check information to signature authentication, section 333, and writes the data proper into memory 31.

Signature authentication section 333 authenticates the signature affixed to the check information, and stores the check information into internal nonvolatile memory 324 after confirming that the check information is free from tampering.

Except for that mentioned above, the processing is the same as that in Embodiment 1.

In this system, through authentication of a signature which is affixed to check information, it is possible to prevent the check information transmitted from a server from being tampered by a malicious third party before the information is stored into tamper-resistant area in a memory device.

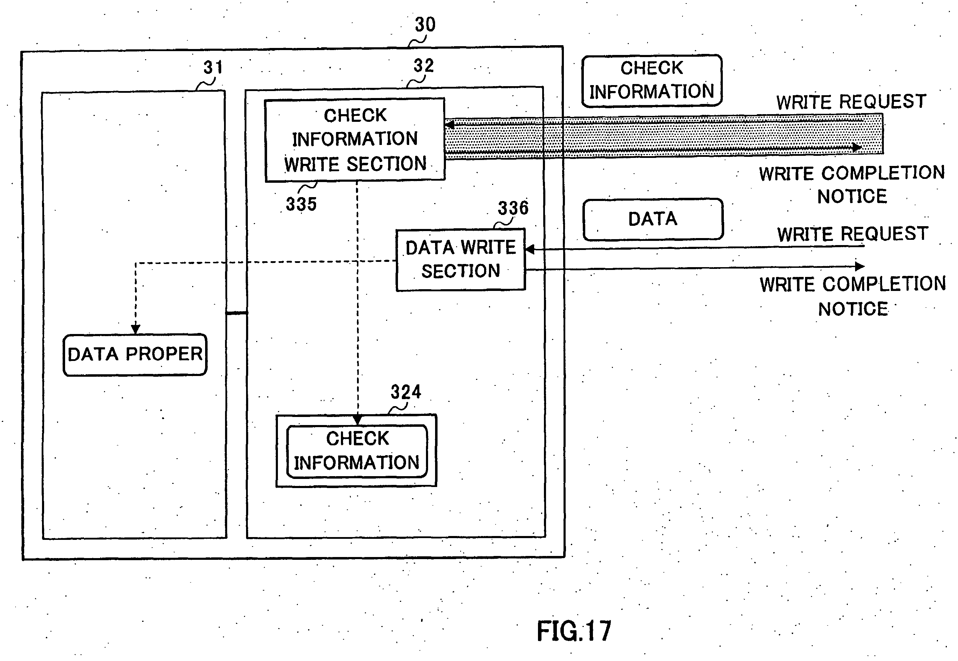

FIG. 17 illustrates a case where check information is transmitted through an encrypted. communication path to prevent the check information from being tampered.

This memory controller 32 comprises data write section 336 that writes data into memory 31 and check information write section 335 that writes check information into internal non-volatile memory 324. The functions of this data write section 336 and check information write section 335 are implemented by the carrying out of program-dictated processing by CPU 323.

In this system, check information is transmitted from server 10 to check information write section 335 in memory device 30 via an encrypted communication path. As in secure messaging in IC cards, and the like, this encrypted communication path is directly established by server 10 and check information write section 335. Check information write section 335 writes the received check information into tamper-resistant internal nonvolatile memory 324.

Meanwhile, data is transmitted from server 10 to memory device 30 via a usual transmission path, and data write section 336 writes the received data into memory 31.

In this system, because check information is transmitted via an encrypted transmission path, it is possible to prevent the check information from being tampered by a malicious third party before the information is stored into tamper-resistant area in a memory device.

### (Embodiment 4)

Embodiment 4 gives an explanation of a data repair system which features an enhanced usage efficiency of tamper-resistant memory area.

As the size of data which is to be stored into a memory device increases, so does the data amount of check information, which makes it harder to write the check information into tamper-resistant memory area. For that reason, this system is configured in such a way that check information is written into non-tamper-resistant memory area in a memory device, whilst test information for testing possible data damage occurred to the check information (test information for check information) is written into tamper-resistant memory area in the memory device.

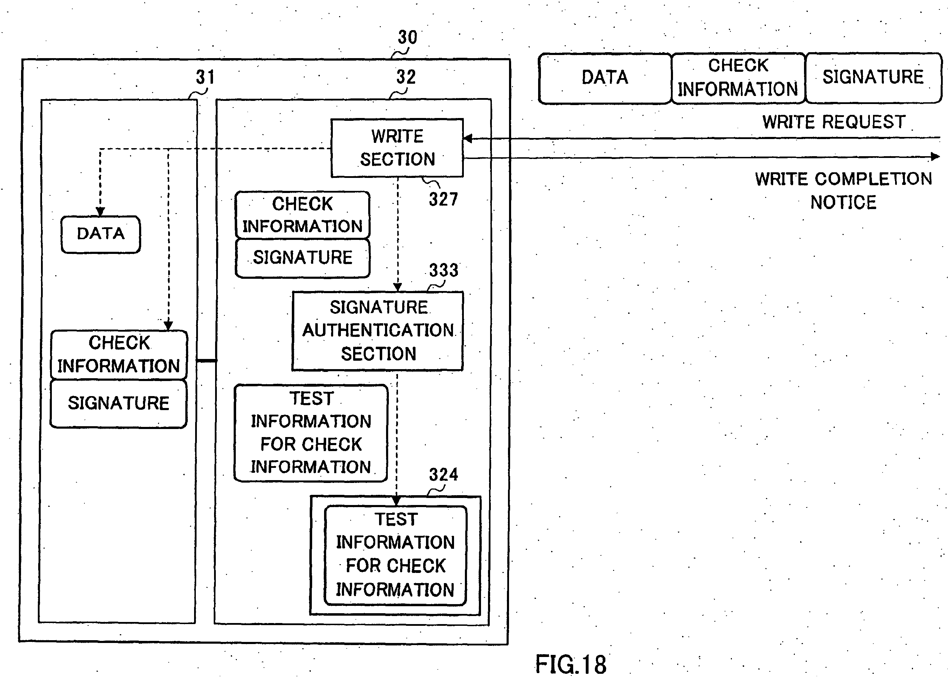

Data processing of this memory device 30 is diagrammatized in FIG. 18. In the same way as illustrated in the FIG. 16, memory controller 32 comprises write section 327, signature authentication section 333, and internal nonvolatile memory 324, and data proper together with check information to which a signature is affixed is downloaded from server 10.

Write section 327 in this memory controller 32 provides the check information with a signature to signature authentication section 333, and then, after authentication by signature authentication section 333 of the signature affixed to the check information, which proves that the check information is not affected by tampering, write section 327 writes the check information with the signature together with the data proper into memory 31.

Meanwhile, signature authentication section 333 calculates a hash value for the check information and the signature (i.e. test information for check information), and stores the calculated hash value (test information for check information) into internal nonvolatile memory 324.

On this occasion, when checking data damage to block, check section 328 reads the check information with the signature out of memory 31, and verifies that the check information is free from damage using the test information for check information, which is stored in internal nonvolatile memory 324. Except for that mentioned above, check processing thereafter is the same as that in Embodiment 1. In the event that the check information is damaged, check information is re-acquired from the server.

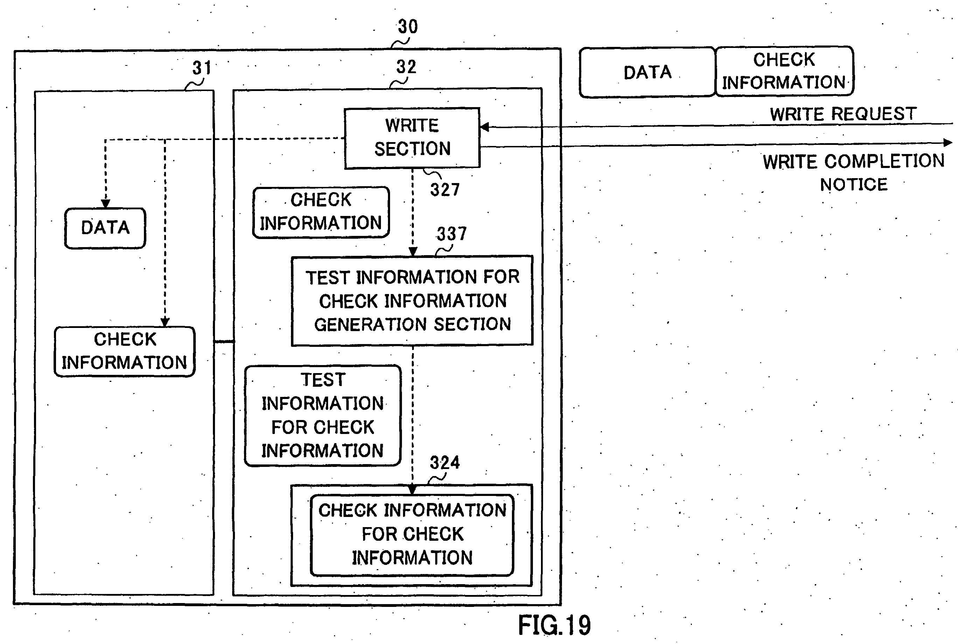

Data processing performed in a case where memory device 30 receives data proper and check information to which no signature is affixed from a server is diagrammatized in FIG. 19. This memory controller 32 comprises test information for check information generating section 337 in addition to write section 327 and internal nonvolatile memory 324. The function of this test information for check information generating section 337 is implemented by the carrying out of program-dictated processing by CPU 323.

Server 10 in this system allows terminal 20 to download the data proper and the check information with no signature. Additionally, as illustrated in FIG. 17, this check information may be transmitted via an encrypted communication path.

Upon reception, of the data proper and the check information, write section 327 in this memory controller 32 relays the check information to test information for check information generating section 337, and in the meantime writes the check information and the data proper into memory 31.

Test information for check information generating section 337 calculates a hash value for the check information data (i.e. test information for check information), and stores the calculated hash value (test information for check information) into internal nonvolatile memory 324.

On this occasion, when checking data damage to the data proper stored in memory 31, check section 328 reads the check information out of memory 31, and verifies that the check information is free from damage using the test information for check information, which is stored in internal nonvolatile memory 324. Except for that mentioned above, check processing thereafter is the same as that in Embodiment 1. In the event that the check information is damaged, check information is re-acquired from the server.

In this system, the check information itself is stored in non-tamper-resistant memory 31, which makes it possible to reduce tamper-resistant memory area occupancy. In this case, although there is a possibility of the occurrence of data damage to check information stored in non-tamper-resistant memory 31 from the time of writing through reading, it is possible to judge whether the check information is in a normal state or not by using test information for check information, held in tamper-resistant area; when the check information itself is not in a normal state, it is still possible to check damage to data proper using check information which is free from errors on every occasion by acquiring check information again from a server.

### (Embodiment 5)

Embodiment 5 explains a system which utilizes data repair function, and in which check information only is downloaded beforehand whilst data proper is downloaded later when demanded for use.

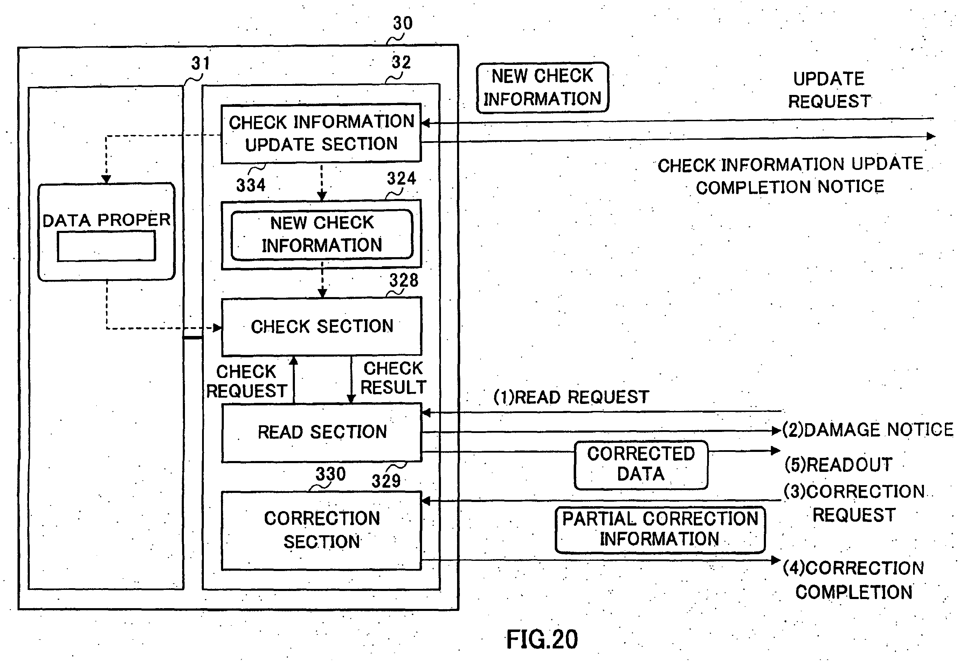

Data processing of memory device 30 in this system is diagrammatized in FIG. 20. Memory controller 32 comprises check information update section 334 that updates check information in addition to check section 328, read section 329, correction section 330, and internal nonvolatile memory 324. The function of this check information update section 334 is implemented by the carrying out of program-dictated processing by CPU 323.

Server 10 in this system, for example, separates newly created program data into a plurality of blocks, and then retains and manages the data proper in each block and the check information thereof. Then, upon reception of a request from terminal 20, or by a "push-type" service, server 10 lets the new check information only be downloaded to terminal 20.

Terminal 20 outputs to memory device 30 the new check information acquired from server 10 together with a check information update request.

Check information update section 334 in memory controller 32 writes the new check information into internal nonvolatile memory 324. At this point in time, program data which corresponds to the new check information has not yet been stored into memory 31.

When this new program data is demanded by a user, a data readout request is issued from terminal 20 to memory device 30 in response to manipulation by the user --- (1).

Upon receipt of the readout request, read section 329 in memory controller 32 outputs a check request to check section 320 in accordance with the procedure illustrated in FIG. 12. Check section 328 reads the new check information out of internal nonvolatile memory 324, and tries to further read out the data proper stored in memory 31 and to calculate a hash value for the data. However, because no corresponding data is stored in memory 31, the section 328 outputs the result of check as an error report to read section 329. Receiving the error report, read section 329 outputs the error report to terminal 20 --- (2).

Triggered by this error report, terminal 20 makes a request to server 10 of issuance source for program data corresponding to the check information, and then server 10 allows the requested program data to be downloaded to terminal 20. Acquiring this data, terminal 20 creates partial correction information which contains this data, and outputs the created information to memory device 30 together with a correction request --- (3).

Upon receipt of the partial correction information, correction section 330 in memory device 30 writes the program data into memory 31 and outputs a correction completion notice to terminal 20 following the procedure illustrated in FIG. 11 --- (4).

The writing of the program data into memory 31 prompts check section 328 to report a check result indicating that the data is "normal" to read section 329, and then read section 329 reads the program data out of memory 31 to output the readout data to terminal 20 --- (5).

As described above, in this system, it is possible to update check information retained in a memory device beforehand whilst the updating of data proper corresponding to the check information is put off until it is demanded by a user.

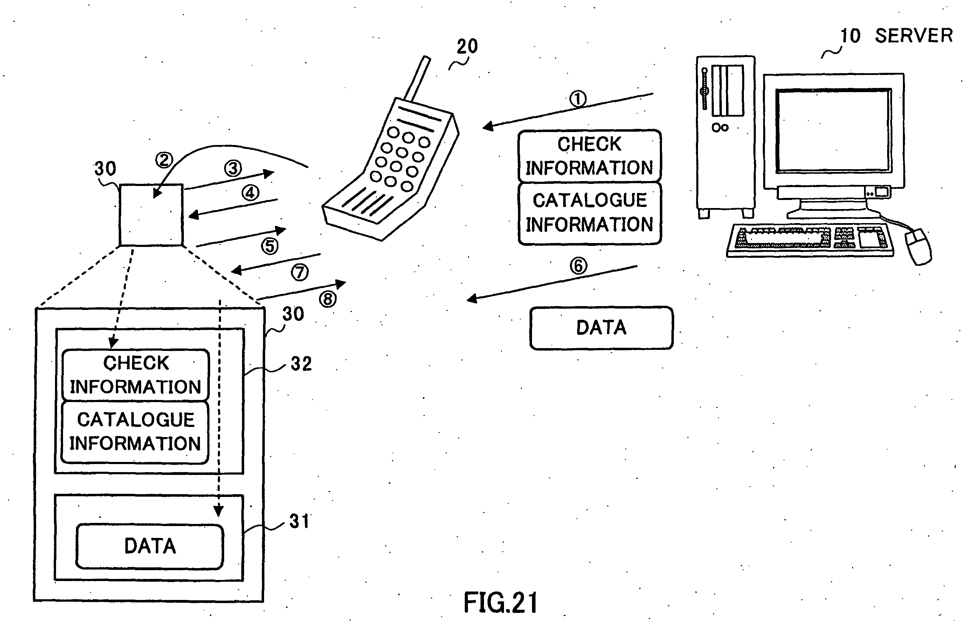

As an application example of this system, FIG. 21 illustrates a procedure in a system in which server 10 allows check information and catalogue information to be downloaded to terminal 20 beforehand whilst content data of contents demanded by a user is downloaded to terminal 20 later when the user demands the contents to be displayed by the catalogue information. First, ① terminal 20 acquires catalog information and check information from server 10.
② Terminal 20 writes the acquired catalogue information and check information into memory device 30. The catalogue information and the check information are written into tamper-resistant memory area in memory device 30.
③ Terminal 20 refers to the catalogue information stored in memory device 30.
④ Terminal 20 attempts to read contents data corresponding to the catalogue information out of memory device 30.
⑤ Memory device 30 sends an error report to terminal 20 in return.
⑥ Terminal 20 makes a request to server 10 for the contents data, and server 10 distributes the contents to terminal 20.
⑦ Terminal 20 writes the contents data into non-tamper-resistant memory area in memory device 30.
⑧ While carrying out data damage check, memory device 30 reads the contents data out to terminal 20.

Herein, in step ①, the catalogue information and the check information may be pre-stored in the memory device. In step ②, the catalogue information may be stored in non-tamper-resistant memory area.

As described above, in this system, it is possible to put off distribution of data proper until the data proper is demanded.

Moreover, in this system, at the occurrence of damage to distributed contents data, a terminal is able to automatically restore the contents data based on check information. Therefore, marketing this check information makes it possible to provide a contents distribution service in which damaged contents data is capable of being restored automatically at the time of such a contents data corruption, or another service aimed at repairing data, which induces new businesses to emerge.

Additionally, although each of the above embodiments explains a case where a memory device carries out check on data damage in response to an external trigger (a check request, a readout request), a memory controller may perform check on data damage spontaneously (e.g. at regular intervals), where the result of the check is reported to the outside if the checked data is damaged.

Additionally, although each of the above embodiments explains a case where data and check information which are to be stored in a memory device are downloaded from a server, these data and/or check information may be written at the stage of manufacture or distribution of the memory devices.

Further in addition, although each of the above embodiments explains a case where data is checked on a block-by-block basis, the present invention is not limited to one which performs the block-by-block check.

Still further in addition, memory devices in the present invention are not limited to card-type devices but also include hard discs and other types of storage devices.

As is clear from the above explanation, because a memory device according to the present invention stores check information into tamper-resistant storage area whilst data proper is stored into non-tamper-resistant storage area, it is possible to store more data, which further makes it possible to actualize low cost production, compared with a system, which stores all data in tamper-resistant storage area. Moreover, even in a case where data proper is damaged, it is possible to detect data damage with reliability by using check information stored in tamper-resistant storage area, and repair the damage completely.

Furthermore, in a data' repair system according to the present invention, normal data is acquired from an external source for repairing damage, if any, to data stored in a memory device, which saves the system from having to retain backup data redundantly, thereby making it possible to enhance the storage efficiency of the memory device. Moreover, it is further possible to narrow the area of data damage down to a small area, and to shorten data communication time required for acquisition of normal data for repair from an external source because check information is created in a unit of a block, not in a unit of the entire data.

Still moreover, through utilization of the functions of a data repair system according to the present invention, it is possible to provide a contents distribution service in which distribution of data proper is put off until the data proper is demanded, or a contents distribution service in which contents data is capable of being restored automatically at the occurrence of damage to contents data, or a service aimed at data repair, which opens a way for pushing ahead with new types of businesses.

This specification is based on the Japanese Patent Application No. 2002-023704 filed on January 31, 2002, entire content of which is expressly incorporated by reference herein.

### INDUSTRIAL APPLICABILITY

The present invention is suited for, for example, a system in which such data as a program for dictating the processing of a terminal apparatus is downloaded to the terminal apparatus from a server via network.

## Claims

1. A memory device comprising:
a tamper-resistant memory area; and
a non-tamper-resistant memory area,
wherein data is stored in said non-tamper-resistant memory area and check information used for checking damage to the data is stored in said tamper-resistant memory area.

2. A memory device comprising:
a first memory area having no tamper resistance that stores data;
a second memory area having tamper resistance that stores check information used for checking data damage;
a write section that writes data acquired from an external source into said first memory area and writes the check information into said second memory area;
a check section that checks data damage using the check information; and
a read section that reads out data which is judged by said check section as normal,
wherein said check section judges whether the data acquired from the external source is normal or not on a block-by-block basis.

3. The memory device according to claim 2, wherein the check information contains check information on a block-by-block basis for the data acquired from the external source, and said write section writes the check information into said second memory area.

4. The memory device according to claim 2, wherein said write section acquires the check information via an encrypted communication path and writes the check information into said second memory area.

5. The memory device according to claim 3, wherein said write section acquires the check information via an encrypted communication path and writes the check information into said second memory area.

6. The memory device according to claim 3, wherein said write section writes the check information into said second memory area after authenticating a signature affixed to the check information acquired from the external source.

7. The memory device according to claim 2, wherein said write section acquires check information used. for checking data damage, creates test information for verifying the check information, writes said test information for verification into said second memory area, and writes the check information used for checking data damage into said first memory area.

8. The memory device according to claim 7, wherein said write section acquires the check information to which a signature is affixed, creates test information for verifying the check information to which the signature is affixed, writes said test information for verification into said second memory area, and writes the check information to which the signature is affixed into said first memory area.

9. The memory device according to claim 2, wherein said write section checks damage to data which is written into said first memory area using the check information, and writes normal data into said first memory area.

10. The memory device according to claim 2, wherein the check information contains issuance source information which indicates an acquisition source of data to be checked, and when a block unit in which data damage has occurred is detected using the check information, said check section outputs an error report which contains the issuance source information and information indicating the block unit.

11. The memory device according to claim 3, wherein the check information contains issuance source information which indicates an acquisition source of data to be checked, and when a block unit in which data damage has occurred is detected using the check information, said check section outputs an error report which contains the issuance source information and information indicating the block unit.

12. The memory device according to claim 2, wherein the check information contains issuance source information which indicates an acquisition source of data to be checked, and when a block unit in which data damage has occurred is detected using the check information, said check section outputs a distribution request of the data in the block unit to the issuance source.

13. The memory device according to claim 3, wherein the check information contains issuance source information which indicates an acquisition source of data to be checked, and when a block unit in which data damage has occurred is detected using the check information, said check section outputs a distribution request of the data in the block unit to the issuance source.

14. The memory device according to claim 10, wherein said check section checks spontaneously the block unit affected by data damage.

15. The' memory device according to claim 11, wherein said check section checks spontaneously the block unit affected by data damage.

16. The memory device according to claim 12, wherein said check section checks spontaneously the block unit affected by data damage.

17. The memory device according to claim 13, wherein said check section checks spontaneously the block unit affected by data damage.

18. The memory device according to claim 2, wherein operation is ceased when the number of times of detection made by said check section for detecting the block unit in which data damage has occurred exceeds a threshold.

19. The memory device according to claim 2, wherein said read section sequentially reads out data in a block unit judged by said check section as normal.

20. The memory device according to claim 2, further comprising a correction section that checks the data in a block unit acquired from the external source using the check information, and writes the data into said first memory area when the data is normal.

21. The memory device according to claim 10, further comprising a correction section that acquires data in a block unit corresponding to the error report from the external source, checks the data using the check information, and writes the data into said first memory area when the data is normal.

22. The memory device according to claim 11, further comprising a correction section that acquires data in a block unit corresponding to the error report from the external source, checks the data using the check information, and writes the data into said first memory area when the data is normal.

23. The memory device according to claim 2, further comprising a decryption section that decrypts encrypted data,
wherein said decryption section decrypts only a block unit of encrypted data judged by said check section as normal, and said read section sequentially reads out data in the block unit decrypted by said decryption section.

24. The memory device according to claim 2, further comprising a decryption section that decrypts encrypted data,
wherein said check section checks data damage contained in data in a block unit decrypted by said decryption section using the check information, and said read section sequentially reads out data in a block unit judged as normal by said check section.

25. The memory device according to claim 20, further comprising a check information update section that updates the check information prior to checking data to be checked,
wherein said correction section writes the data into said first memory area.

26. A terminal apparatus that stores data in a non-tamper-resistant memory area of a memory device and stores check information used for checking damage to the data in a tamper-resistant memory area of the memory device.

27. A terminal apparatus that acquires from a server data separated on a block-by-block basis and check information for checking data damage to each block, stores the data in a first memory area having no tamper resistance in a memory device, and stores the check information in a second memory area having tamper resistance in the memory device.

28. The terminal apparatus according to claim 27 that, upon reception of an error report indicating a block in which data damage has occurred from the memory device, acquires data of the block from the server, and stores the acquired data in the first memory area of the memory device.

29. The terminal apparatus according to claim 27 that, when a distribution request to an issuance source of the data in a block unit in which data damage has occurred is outputted from the memory device, acquires the data of the block from a server of the issuance source and stores the acquired data in the first memory area of the memory device.

30. The terminal apparatus according to claim 28 that, when the number of times of the error report from the memory device or the number of times of the distribution request from the memory device exceeds a threshold, ceases data acquisition from the server.

31. The terminal apparatus according to claim 29 that, when the number of times of the error report from the memory device or the number of times of the distribution request from the memory device exceeds a threshold, ceases data acquisition from the server.

32. A data repair system comprising:
a server that manages data and check information for checking damage to the data;
a terminal apparatus that acquires the data and the check information from said server; and
a memory device that stores the data acquired by said terminal apparatus from said server into a non-tamper-resistant memory area and stores the check information acquired by said terminal apparatus from said server into a tamper-resistant memory area,
wherein said memory device detects damage to the data using the check information, and said terminal apparatus acquires data for which damage has been detected from said server, and said memory device repairs the data damage by using the data acquired by said terminal apparatus.

33. A data repair system comprising:
a server that manages data separated on a block-by-block basis and check information for checking damage to the data in each block;
a terminal apparatus that acquires the data and the check information from said server; and
a memory device that stores the data acquired by said terminal apparatus into a first memory area having no tamper resistance and stores the check information acquired by said terminal apparatus into a second memory area having tamper resistance,
wherein said memory device detects a block in which data damage has occurred using the check information, and said terminal apparatus acquires data in the detected block, and said memory device repairs the data damage by using the data acquired by said terminal apparatus.

34. The data repair system according to claim 33, wherein said terminal apparatus acquires the.check information from said server prior to the data, and said memory device stores the check information and, when reading of the data is requested, detects the data, which is not yet stored, as damaged data, and upon such detection, said terminal apparatus acquires the data from said server and stores the acquired data in said memory device.

35. A memory device comprising:
a first memory area having no tamper resistance that stores data;
a second memory area having tamper resistance that stores check information used for checking data damage;
a write section that writes data acquired from an external source into said first memory area and writes the check information into said second memory area;
a check section that checks damage to the data acquired from the external source using the check information; and
a read section that reads out data judged by said check section as normal.

36. A terminal apparatus that acquires from a server data and check information for checking damage to the data, stores the data in a first memory area having no tamper resistance in a memory device and stores the check information in a second memory area having tamper resistance in the memory device.

37. A data repair system comprising:
a server that manages data and check information for checking damage to the data;
a terminal apparatus that acquires the data and the check information from said server; and
a memory device that stores the data acquired by said terminal apparatus into a first memory area having no tamper resistance and stores the check information acquired by said terminal apparatus into a second memory area having tamper resistance,
wherein said memory device detects whether the data is damaged or not using the check information, and said terminal apparatus acquires data for which damage has been detected from said server, and said memory device repairs the data damage by using the data acquired by said terminal apparatus.
